**Europäisches Patentamt**

**European Patent Office**

**Office européen des brevets**

(19)

(11) Veröffentlichungsnummer: **0 140 073**
**B1**

(12) EUROPÄISCHE PATENTSCHRIFT

(45) Veröffentlichungstag der Patentschrift: **16.05.90**

(21) Anmeldenummer: **84110737.8**

(22) Anmeldetag: **08.09.84**

(51) Int. Cl.⁵: **B 01 D 69/10,** B 01 D 53/22,
B 01 D 59/14, C 01 B 3/50,
C 01 B 4/00

(54) **Wasserstoff-Permeationswand.**

(30) Priorität: **08.09.83 DE 3332348**

(43) Veröffentlichungstag der Anmeldung:
**08.05.85 Patentblatt 85/19**

(45) Bekanntmachung des Hinweises auf die
Patenterteilung:
**16.05.90 Patentblatt 90/20**

(84) Benannte Vertragsstaaten:
**AT BE CH DE FR GB IT LI LU NL SE**

(56) Entgegenhaltungen:
DE-A-1 533 021
DE-A-2 629 719
DE-B-1 212 049
DE-B-1 252 634
DE-C-1 467 079
US-A-3 238 704
US-A-3 244 763
US-A-3 266 223

(73) Patentinhaber: **Forschungszentrum Jülich
GmbH
Postfach 1913
D-5170 Jülich (DE)**

(72) Erfinder: **Iniotakis, Nicolaos
Kopernikusstrasse 64
D-5170 Jülich (DE)**
Erfinder: **VON DER Decken, Claus-Benedict,
Prof.
Reumont Strasse 34
D-5100 Aachen (DE)**
Erfinder: **Fedders, Heinrich, Dr.
Franziskusstrasse 3
D-5170 Jülich (DE)**
Erfinder: **Fröhling, Werner, Dr.
Keltenstrasse 38
D-5160 Düren (DE)**
Erfinder: **Sernetz, Friedrich, Dr.
Rannenbergring 23
D-8755 Alzenau-Kälberau (DE)**

Courier Press, Leamington Spa, England.

EP 0 140 073 B1

## Beschreibung

Die Erfindung bezieht sich auf eine Wasserstoff-Permeationswand in Form einer <100 μm, insbesondere 10 μm bis 30 μm dicken, selektiv wasserstoffdurchlässigen Metallschicht aus einem Material mit hohem Wasserstoff-Permeationskoeffizienten, insbesondere auf der Basis von Palladium, mit angrenzender gasdurchlässiger Stützstruktur.

Die hohe Permeationsfähigkeit von Wasserstoff durch geeignete Membranen wird in der Technik vielfältig angewendet. Die Membranen übernehmen dabei die Aufgabe einer Trennwand zwischen zwei Räumen, die jedoch für Wasserstoff in möglichst hohem Maße durchlässig ist.

Als erstes Beispiel ist die Entfernung von Verunreinigungen aus Wasserstoffgas zu nennen: Der zu reinigende Wasserstoffstrom wird an der Primärseite einer aus Pd oder Pd-Ag-Legierung bestehenden Trennwand entlang geführt. Durch Permeation zur Sekundärseite entsteht dort hochgereinigter Wasserstoff, während die Verunreinigungen auf der Primärseite verbleiben. Für einen hohen Wasserstoff-Permeationsstrom muß—neben anderen Betriebs—und Materialparametern—die Wandstärke der Trennwand möglichst gering sein.

Ein weiteres Beispiel ist die in der DE—OS 31 21 125 beschriebene wahlweise selektive oder nichtselektive Abtrennung bestimmter Wasserstoffisotope, z.B. Tritium, aus einem Wasserstoffisotopengemisch: Die Wasserstoffisotope permeieren durch eine Trennwand, treten mit einer sekundärseitig zugeführten Substanz in Wechselwirkung und werden mit dieser abgeführt. Durch die Wahl der Substanz kann bewirkt werden, daß entweder alle Wasserstoffisotope abgeführt werden oder aber bevorzugt nur ein bestimmtes Isotop, z.B. Tritium.

Die Trennwände, die bei den vorstehend beschriebenen und ählichen Verfahren angewandt werden, müssen eine hohe Durchlässigkeit für Wasserstoff haben. Als Materialien kommen metallische Werkstoffe wie Nb, Ta, V, Pd und Zr, aber auch bestimmte Gläser und Kunststoffe je nach herrschenden Umgebungsbedingungen in Betracht. So ist bei den metallischen Werkstoffen eine Versprödung durch Bildung von Hydriden und eine starke Verminderung des Wasserstoffpermeationskoeffizienten durch die Bildung von hemmenden Deckschichten auf der Trennwandoberfläche, z.B. in Form von Metalloxiden zu berücksichtigen. Aus diesem Grunde werden vornehmlich Palladium und seine Legierungen angewandt, die weitgehend resistent sowohl gegen eine Hydridbildung als auch gegen Oberflächenoxidation sind. Palladium ist jedoch teuer und nur in beschränktem Umfange verfügbar. Auch aus diesem Grunde werden möglichst dünne Membranen angestrebt. Wegen der erforderlichen mechanischen Stabilität liegt die untere Grenze der erreichbaren Wandstärken jedoch bei dünnwandigen Rohren bei etwa 70 μm, selbst wenn im Innern Verstärkungselemente, wie z.B. Spiralfedern vorgesehen werden (DE—PS 1 467 079).

Um die Pd-Wandstärke weiter zu verringern, sind poröse Träger z.B. aus Sintermetall vorgeschlagen worden, auf die eine dünne Pd-Schicht von bis zu ca. 12 μm Stärke, z.B. durch Aufdampfen, aufgebracht wird (US—PSen 2 824 620 und 3 241 298).

Bei porösen Trägen, die aus Kornmaterial, wie z.B. aus Metallpartikeln, hergestellt werden, beträgt die für die gewünschte Festigkeit erforderliche Wandstärke ca. 500 μm bis 1000 μm. Diese führt zu einer wesentlichen Verminderung der effektiven Permeationsgeschwindigkeit durch die gesamte Trennwand:

Während die effektive Permeationsgeschwindigkeit des Wasserstoffs durch ein freitragendes Pd-Rohr nur durch den Permeationsschritt durch das Metall bestimmt wird, ist bei der Kombination eines porösen Trägers von 500 μm Dicke und einer Pd-Schicht von 5 μm Dicke für die effektive Permeationsgeschwindigkeit im wesentlichen die Diffusionsgeschwindigkeit im porösen träger maßgebend. Da hierdurch die zur Erzielung eines bestimmten Permeationsstromes erforderliche Permeationsfläche und damit der Bedarf an Pd bestimmt wird, kann der Vorteil der geringen Stärke der Pd-Schicht also nur sehr schlecht genutzt werden.

Aufgabe der Erfindung ist daher die Schaffung einer Wasserstoff-Permeationswand, die bei ausreichender Stabilität eine möglichst hohe Durchlässigkeit für Wasserstoff besitzt. Diese Aufgabe wird durch eine Permeationswand der eingangs genannten Art gelöst, die dadurch gekennzeichnet ist, daß die Stützstruktur dur eine beidseitige Abstützung der Metallschicht durch je ein benachbartes feinmaschiges Metallnetz oder -gewebe mit einer Maschenweite von maximal 50 μm, insbesondere 2 bis 20 μm gebildet wird.

Danach schließen zwei feinmaschige Metallgewebe eine dünnwandige Folie oder Schicht aus Pd oder einer Pd-Legierung (oder anderem wasserstoffdurchlässigen Metall) ein, wodurch sowohl eine Fixierung als auch ein Schutz der Folie bzw. der Schicht erreicht wird. Als selektiv wasserstoffdurchlässige Metalle kommen insbesondere Nb, Ta, V, Pd und Zr in Frage, vorzugsweise jedoch Pd und Pd-Legierungen.

Zur Aufnahme von Kräften, welche aus Druck und Strömung der die Wand beaufschlagenden Fluide herrühren und zur Fixierung der Folie im Falle großer Wandflächen kann die Wand faltenbalgähnlich gestaltet sein.

Eine Kombination von dünnwandigen Membranen für Osmose, Dialyse und dergleichen mit einer Stützstruktur aus feinmaschigem Metallgewebe ist zwar bereits aus der DE—OS 26 29 719 bekannt. Hierbei wird jedoch lediglich eine einseitige Abstützung angestrebt. So wird z.B. eine schlauchförmige Membran in ein Stützrohr aus Metallgewebe eingelegt. Bei sehr dünnen Metallfolien z.B. 10 μm Wandstärke ist jedoch die Montage größeren Rohrflächen nach dieser DE—OS wegen der mechanischen Empfindlichkeit solcher Folien nicht mehr möglich. Hinzu kommt, daß derartige dünne Metallfolien für sich allein nur sehr schlecht verschweißt oder verlötet werden könne, was die Herstellung schlauchförmiger Membranen problematisch macht.

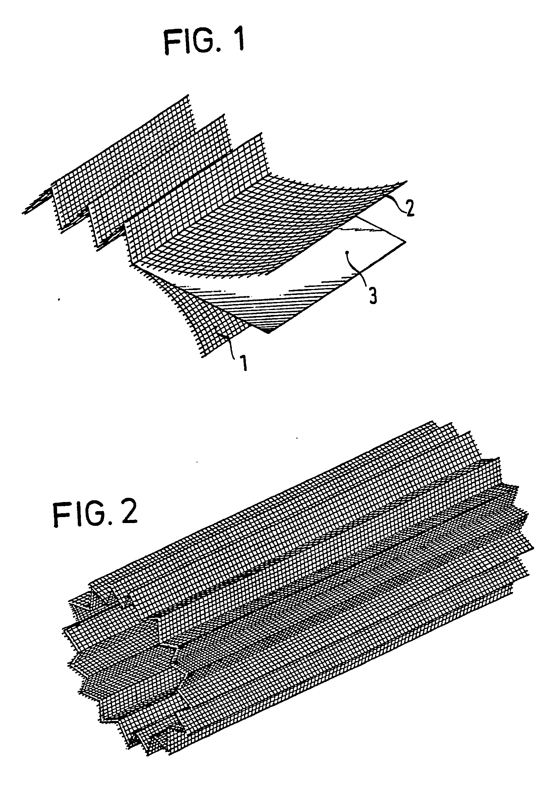

Die erfindungsgemäße beidseits abgestütze Membran ist dagegen ohne weiteres herstellbar und verarbeitbar. Ihre Herstellung wird anhand des in Fig. 1 skizzierten Beispiels erläutert:

Zwischen zwei feinmaschige Metallgewebe 1 und 2 mit einer Maschenweite von z.B. 5 bis 50 μ, welche den Gastransport zur Folie nicht nennenswert behindern, wird eine Folie 3 aus einer Pd—Ag(75/25)-Legierung gelegt, die eine Wandstärke von ca. 10 μm besitzt. Die Maschenweite wird dadurch bestimmt, daß bei dem anstehenden Druck ein "Durchsacken" der Folie vermieden werden muß.

Folien der genannten Art können in Breiten bis 200 mm z.B. durch Walzen hergestellt werden, wobei längen bis zu 1 m und mehr möglich sich. Soll die Permeationswand mehr als 200 mm breit sein, so können mehrere Folienstreifen mit einer geringen Überlappung von ca 5 mm nebeneinander gelegt werden.

Die aus drei Lagen bestehende Permeationswand wird nun mit einer Abkanteinrichtung faltenbalgähnlich gefaltet, wie in Figur 1 angedeutet ist. Die die Folie 3 einschließenden Metallnetze 1 und 2 sind der Anschaulichkeit halber abstehend dargestellt. Die Faltenhöhe kann nach Stabilität und Strömungskriterien frei gewählt werden und z.B. zwischen 3 und 10 mm liegen.

Aus der gefalteten Permeationswand kann insbesondere, wie in Figur 2 angedeutet ist, eine rohrförmige Filterkerze gebildete werden. Die Längsnaht kann durch Verschweißen oder Verlöten gebildet werden, wobei die insgesamt vier zusammenstoßenden Metallgewebe genügend Strukturmaterial für den Fügevorgang mitbringen. Die derartig gebildete rohrförmig Filterkerze kann anschließend nach bekannten Methoden weiter z.B. mit Anschlußstücken konfektioniert werden.

Wird auf der Innenseite eine große Strömungsgeschwindigkeit gewünscht, so kann der Faltenbalg gemäß Figur 2 direkt um ein Rohr gelegt werden, welches als Verdrängerkörper wirkt.

Wenn kein Verdrängerrohr gewünscht wird, kann die mechanische Stabilität der Filterkerze bei Bedarf dadurch erhöht werden, daß der Faltenbalg gemäß Figur 2 um ein aus Drähten gebildeten Stützrohr gelegt wird. Derartige Rohre bestehen z.B. aus kreisförmig angeordneten Stäben, die durch angeschweißte Wikkeldrähte miteinander verbunden sind. Das Stützrohr hat weiter die Eigenschaft, daß im Falle einer Strömung im angrenzenden Bereich Turbulenzen entstehen und hierdurch der Stofftransport und der Stoffaustausch unmittelbar an den Wänden begünstigt werden. Hierdurch wird die Wasserstoffpermeation erhöht.

Die durch Faltung gebildete Permeationswand besitzt neben der geschilderten Eigenschaft, die empfindliche Pd-Folie zu fixieren, weitere Vorteile:

—ein höheres Angebot an Permationsflache gegenüber glatten Rohrwandungen, d.h. es ist ein kompaktere Bauart der Filteranlage möglich;

—wegen der guten Steifigkeit der gefalteten Rohrwand ist je nach Beanspruchung der Fortfall weiterer mechanischer Abstützungen möglich, d.h. die Faltenwand kann frei zwischen Endstücken angeordnet sein, auch bei ebener Geometrie.

Selbstverständlich ist auch eine nichtgefaltete Ausführung möglich. In diesem Falle wird die aus zwei Metallgeweben mit dazwischen liegender Folie bestehende Permeationswand insb. durch ein Tragwerk unterstützt, z.B. um ein wie vorstehend beschribenes Stützrohr gelegt und die Längsnaht verschweißt oder verlötet.

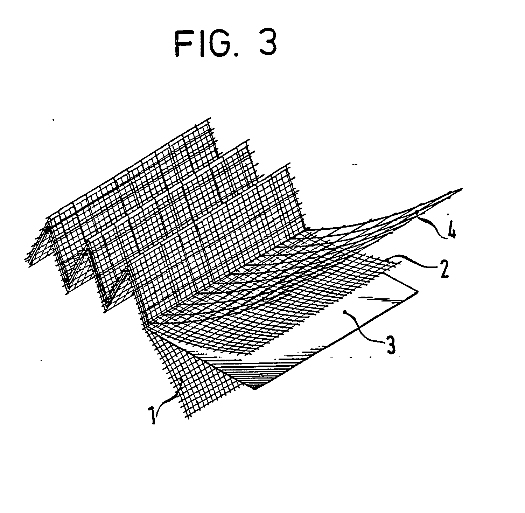

Sowohl für die gefaltete als auch für die nichtgefaltete Ausführung kann eine zusätzliche Verstärkung z.B. zur Aufnahme größerer Druckdifferenzen dadurch erreicht werden, daß an einer oder auch an beide Metalltücher außen anliegend ein zusätzliches Tragwerk bzw. grobes Maschennetz angeordnet wird. Als Beispiel ist in Figur 3 schematisch gezeigt, wie zusätzlich zu den Metalltüchern 1 und 2 ein grobes Metallnetz 4 vorgesehen werden kann.

Die beidseitige Einfassung der Folien durch Metallgewebe hat neben der Aufgabe, die Folie zu fixieren den Zweck, die Folie zu schützen. Auch eine gut von Stäuben gereinigte Strömung wird noch mit Staubpartikeln unter 1 μm beladen sein, welche die Folie bedecken und passivieren könnten. Das der Folie vorgeschaltete Metallgewebe dient nun als Staubfilter für diese Feinstäube, da die mit Feinstaub beladene Gasströmung parallel und nicht senkrecht zur Metallgewebeoberfläche verläuft.

Bei Verwendung der vorliegenden Permetationswand als selektives Tritiumsfilter beim Verfahren gemäß der DE—OS 3 121 125, wonach beispielsweise Tritium als einem mit Helium betriebenen Reaktorkühlkreislauf durch Permeation durch ein wasserstoffdurchlässige Wand und Reaktion hinter der Wand mit einem wasserstoffaufnehmenden Material entfernt wird, ergeben sich durch die Erfindung einige weitere wichtige Vorteile:

Die Folie wird durch die Metallgewebe beidseitig auch vor passivierenden Spaltprodukten—z.B. Jod-geschützt, welche dem Primärgas beigemischt sind. Das Jod wird mit hoher Wahrscheinlichkeit vor Erreichen der Folie mit der Oberfläche des Metallgewebes in Berührung kommen und dort adsorbiert werden. Das heißt, die Folie bleibt zumindest zunächst frei von solchen Einflüssen.

Zur Steigerung des Permeationsflusses werden Wasserstoffpermeationswände üblicherweise bei erhöhten Temperaturen angewandt, die beispielsweise bis 600°C reichen können. In solchen Temperaturbereichen besteht bereits eine erhebliche Gefahr der Interdiffusion von Metall zwischen den sich berührenden Flächen, d.h., eine Palladiumfolie würde beispielsweise durch Abwanderung von Palladium in ein aufnahmefähiges Metallgewebe an den Berührungsstellen geanschwächt. Um dies zu verhindern, kann die Gewebeoberfläche, insbesondere der an die Metallschicht angrenzende Bereich, mit einer Diffusionshemmschicht (beispielsweise aus Nickel oder insbesondere aus dem Werkstoff der Folie selbst) versehen werden. Schichtdicken von etwa einigen um wären zur Steigerrung der Haltbarkeit der Permeationswand im Hochtemperaturbereich durch eine solche Diffusionshemmschicht nützlich.

Allgemein, aber insbesondere bei erhöhten Temperaturen, werden Gewebe aus hitzebeständigem Material wie z.B. webbaren Nickel-Basis-Legierungen eingesetzt. Da die mit dem Metallgewebe während des Betriebes in Kontakt gebrachten (insbesondere heißen) Gase korrosive Bestandteile enthalten können, is es zweckmäßig, die Metallgewebe mit einem korrosionshemmenden Metallüberzug (z.B. aus Edelmetall oder einer Edelmetall-Legierung) zu versehen. Vorzugsweise wird ein solcher Überzug vorgesehen, der auch für die Isotopenaustauschreaktion förderlich ist, so daß im Falle einer selektiven Trennung der Wasserstoffisotope (z.B. gemäß DE—OS 3 121 125) eine Beschleunigung der Austauschreaktion erreicht wird.

Die Permeationsrichtung kann grundsätzlich frei gewählt werden. Ausschlaggebend für die wahl der Permeationsrichtung kann. z.B. die turbulenzerzeugende Wirkung eines eingesetzten Tragwerks sein.

Neben einer Stützkonstruktion auf feinmaschigem Metallgewebe ist auch eine Stützkonstruktion aus einem gelochten Metallblech anwendbar. Mittels Elektronen- oder Laserstrahl lassen sich Löcher mit z.B. 50 µm Durchmesser in ein dünnes Metallblech einbrennen. Ein solches Lochblech kann bei geeigneter Lochanordnung ebenfalls eine hohe Gasdurchlässigkeit haben und kann somit (z.B. analog dichtester Kugelpackung bzw. Kreispackung) als Stützkonstruktion dienen. Eine solche noch als Netz anzusehende Anordnung hat zwar gegenüber dem Metallgewebe eine höher Auflagefläche, was für die Gasdurchlässigkeit der Wand nachteilig sein kann, jedoch kann die durchaus wirtschaftliche Herstellung diesen Nachteil kompensieren.

**Patentansprüche**

1. Wasserstoff-Permeationswand in Form einer <100 µm, insbesondere 10 µm bis 30 µm dicken, selektiv wasserstoffdurchlässigen Metallschicht mit hohem Wasserstoff-Permeationskoeffizienten, insbesondere auf der Basis von Palladium, mit angrenzender gasdurchlässiger Stützstruktur, dadurch gekennzeichnet, daß die Stützstruktur durch eine beidseitige Abstützung der Metallschicht (3) durch mindestens je ein benachbartes feinmaschiges Metallnetz oder -gewebe (1, 2) mit einer Maschenweite von maximal 50 µm, insbesondere 2 bis 20 µm gebildet ist.

2. Permeationswand nach Anspruch 1, gekennzeichnet durch eine Fältelung oder Wellung der Metallschicht und der beidseits angrenzenden Stützstrukturen.

3. Permeationswand nach Anspruch 1 oder 2, gekennzeichnet durch ein zusätzliches ein- oder beidseitig vorgesehenes grobmaschiges oder grobes Tragwerk.

4. Permeationswand nach einem der Ansprüche 1 bis 3 in Rohrform, gekennzeichnet durch einen rohrförmigen Verdrängerkörper, auf dessen Außenseit die beidseitig angestützte Metallschicht gegebenenfalls unter Zwischenschaltung eines die Gaszirkulation in dem an die Außenseite des Verdrängerkörpers angrenzenden Zwischenraum zulassenden Tragwerks ruht.

5. Permeationswand nach einem der vorangehenden Ansprüche, gekennzeichnet durch eine Diffusionshemmschicht auf dem Metallgewebe, insbesondere auf der der Metallschicht zugekehrten Oberfläche.

6. Permeationswand nach Anspruch 5, dadurch gekennzeichnet, daß die Diffusionshemmschicht durch Nickel gebildet ist.

7. Permeationswand nach einem der vorangehenden Ansprüche, dadurch gekennzeichnet, daß die Oberfläche des Metallgewebes einen korrosionshemmenden Metallüberzug aufweist.

8. Permeationswand nach Anspruch 7, dadurch gekennzeichnet, daß der Metallüberzug aus Edelmetall oder einer Edelmetall-Legierung besteht.

9. Permeationswand nach einem der vorangehenden Ansprüche, dadurch gekennzeichnet, daß das Metallnetz oder -gewebe aus einer Nikkelbasislegierung besteht.

**Revendications**

1. Paroi perméable à l'hydrogène, sous la forme d'une couche métallique, d'une épaisseur inférieure à 100 µm, et notamment de 10 µm à 30 µm, perméable sélectivement à l'hydrogène et ayant un grand coefficient de perméation de l'hydrogène, notamment à base de palladium, comprenant une structure d'appui adjacente, perméable au gaz, caractérisée en ce que la structure d'appui est formée d'un appui des deux côtés de la couche métallique (3) par au moins respectivement une grille métallique ou une toile métallique (1, 2) voisine, à mailles fines, ayant une dimension de maille de 50 µm au plus, et notamment de 2 à 20 µm.

2. Paroi suivant la revendication 1, caractérisée par un pliage ou une ondulation de la couche métallique et des structures d'appui adjacentes des deux côtés.

3. Paroi suivant la revendication 1 ou 2, caractérisée par un support supplémentaire à mailles grossières ou grossier, prévu d'un côté ou des deux côtés.

4. Paroi suivant l'une des revendications 1 à 3 sous forme tubulaire, caractérisée par un corps de refoulement tubulaire sur le côté extérieur duquel repose la couche métallique appuyée des deux côtés, le cas échéant avec interposition d'un support autorisant la circulation du gaz dans l'espace intermédiaire adjacent au côté extérieur du corps de refoulement.

5. Paroi suivant l'une des revendications précédentes, caractérisée par une couche d'inhibition de la diffusion sur la toile métallique, notamment sur la surface tournée vers la couche métallique.

6. Paroi suivant la revendication 5, caractérisée en ce que la couche inhibant la diffusion est formée de nickel.

7. Parois suivant l'une des revendications précédentes, caractérisée en ce que la surface de la toile métallique comporte un revêtement métallique inhibant la corrosion.

8. Paroi suivant la revendication 7, caractérisée en ce que le revêtement métallique est en métal fin ou en un alliage de métal fin.

9. Paroi suivant l'une des revendications précédentes, caractérisée en ce que la grille ou la toile métallique est en un alliage à base de nickel.

**Claims**

1. Permeable membrane for hydrogen in the form of a selectively hydrogen-permeable metal layer <100 μm thick, in particular 10 μm to 30 μm thick having a high hydrogen permeation coefficient, in particular based on palladium and having an adjacent gas-permeable supporting structure, characterized in that the supporting structure is formed by double-sided reinforcement of the metal layer (3) by at least one adjacent fine-mesh metal grid or metal gauze (1, 2) having a mesh size not exceeding 50 μm, in particular 2 to 20 μm in each case.

2. Permeable membrane according to Claim 1, characterized by a pleating or corrugation of the metal layer and of the supporting structures adjacent on both sides.

3. Permeable membrane according to Claim 1 or 2, characterized by an addition coarse-mesh or coarse supporting frame provided on one side or both sides.

4. Permeable membrane according to any of Claims 1 to 3 in tubular form, characterized by a tubular displacement body on the outside of which the metal layer supported on both sides rests, optionally with the interposition of a supporting frame permitting the gas circulation in the intermediate space adjacent to the outside of the displacement body.

5. Permeable membrane according to one of the preceding claims, characterized by a diffusion inhibiting layer on the metal gauze, in particular on the surface facing the metal layer.

6. Permeable membrane according to Claim 5, characterized in that the diffusion inhibiting layer is formed by nickel.

7. Permeable membrane according to one of the preceding claims, characterized in that the surface of the metal gauze has a corrosion-inhibiting metal coating.

8. Permeable membrane according to Claim 7, characterized in that the metal coating is composed of noble metal or of a noble metal alloy.

9. Permeable membrane according to one of the preceding claims, characterized in that the metal grid or metal gauze is composed of a nickel-base alloy.

# FIG. 1

# FIG. 2

# FIG. 3